# EUROPÄISCHE PATENTSCHRIFT

(11) **EP 3 076 062 B1**
(45) Veröffentlichungstag und Bekanntmachung des Hinweises auf die Patenterteilung: **11.09.2019**
(21) Anmeldenummer: 16165064.3
(22) Anmeldetag: 13.04.2016
(51) Int. Cl.: F16L 27/108, G01G 23/06

(54) **FLEXIBLES VERBINDUNGSELEMENT ZUR VERBINDUNG EINER ERSTEN EINRICHTUNG MIT EINER ZWEITEN EINRICHTUNG, INSBESONDERE WAAGENKOMPENSATOR**
FLEXIBLE CONNECTING ELEMENT FOR CONNECTING A FIRST DEVICE WITH A SECOND DEVICE, IN PARTICULAR SCALE COMPENSATOR
ÉLEMENT DE LIAISON SOUPLE DESTINE A RELIER UN PREMIER DISPOSITIF A UN SECOND DISPOSITIF, EN PARTICULIER UN COMPENSATEUR DE BALANCES

(30) Priorität: 17.04.2015 DE 102015207073; 15.06.2015 DE 102015210960
(43) Veröffentlichungstag der Anmeldung: 05.10.2016
(73) Patentinhaber: Hecht Technologie GmbH, 85276 Pfaffenhofen/IIm (DE)
(72) Erfinder: Hecht, Jan, 85276 Pfaffenhofen/Ilm (DE); Glöckl, Erich, 86558 Hohenwart (DE); Lohmeier, Harald, 85301 Frickendorf (DE)
(74) Vertreter: Kilian Kilian & Partner

(56) Entgegenhaltungen:
- US-A- 4 101 150
- US-A- 4 293 152
- US-A1- 2005 023 829
- Gummitechnik Willbrandt: "WILLBRANDT The Compensator Catalogue Product Description Technical Data Advice on Application Calculation Criteria Contents", , 4. April 2012 (2012-04-04), XP055297598, Gefunden im Internet: URL:http://www.hechtrubber.com/willbrandt/ comp2.pdf [gefunden am 2016-08-25]

## Beschreibung

Die Erfindung betrifft ein flexibles Verbindungselement zur Verbindung einer ersten Einrichtung mit einer zweiten Einrichtung und zur Durchleitung eines Schüttgutes von der ersten Einrichtung in die zweite Einrichtung. Insbesondere betrifft die Erfindung einen entsprechenden Waagenkompensator zur Verbindung der ersten Einrichtung mit der zweiten Einrichtung und zur Durchleitung des Schüttgutes von der ersten Einrichtung in die zweite Einrichtung.

Flexible Verbindungselemente zur Verbindung zweier Einrichtungen und zur Überführung eines Schüttgutes von der einen Einrichtung in die andere Einrichtung sind im Stand der Technik bekannt.

Stand der Technik wird zum Beispiel durch die US 4 293 152 A und die DE 20 2008 012 645 U1 gebildet.

Beispielsweise offenbart das Dokument DE 20 2008 012 645 U1 einen aus einem flexiblen Material gebildeten Waagenkompensator, der sowohl an einer ein Schüttgut enthaltenden Einrichtung als auch an einer Wiegeeinrichtung befestigt wird. Das Schüttgut wird von der das Schüttgut enthaltenden Einrichtung durch den Waagenkompensator hindurch in die Wiegeeinrichtung geleitet. Der Waagenkompensator ist so ausgestaltet, dass Kräfte, die auf die das Schüttgut enthaltende Einrichtung wirken, nicht auf die Wiegeeinrichtung übertragen werden und Messergebnisse verfälschen.

Zur Befestigung des Waagenkompensators an den genannten Einrichtungen wird in dem Dokument die Möglichkeit erläutert, gesonderte Anschlusselemente, wie zum Beispiel Tri-clamp-Anschlusselemente, an dem Einlauf- und Auslaufstutzen des Waagenkompensators vorzusehen.

Diese gesonderten Anschlusselemente sind entweder aus einem Metall oder einem Kunststoff ausgebildet und können an den Waagenkompensator angegossen oder an diesem mittels eines Klebstoffes befestigt werden.

Das Angießen oder die Klebstoffbefestigung der Anschlusselemente führt zu einem erhöhten Herstellungsaufwand des Waagenkompensators und dazu, dass das Anschlusselement bei jedem Wechsel des Waagenkompensators zwangsläufig mit ersetzt werden muss.

Darüber hinaus besteht die Besorgnis, dass sich die Verbindung zwischen dem Anschlusselement und dem flexiblen Material zumindest teilweise löst und sich in dem entsprechend gebildeten Zwischenraum Schüttgut ansammelt.

Vor diesem Hintergrund ist es Aufgabe der vorliegenden Erfindung, ein flexibles Verbindungselement, insbesondere einen Waagenkompensator, zu schaffen, der eine einfachere Herstellung und Handhabung ermöglicht.

Diese Aufgabe wird mit einem Verbindungselement gemäß Patentanspruch 1 gelöst.

Bevorzugte Ausführungsformen der Erfindung sind Gegenstand der abhängigen Patentansprüche.

Aspekte der Erfindung sind nachstehend aufgeführt.

Ein erfindungsgemäßes flexibles Verbindungselement zur Verbindung einer ersten Einrichtung mit einer zweiten Einrichtung und zur Durchleitung eines Schüttgutes von der ersten Einrichtung in die zweite Einrichtung beinhaltet einen einen Durchleitungskanal festlegenden Grundkörper mit (i) einem ersten Endabschnitt, an dem eine Eintrittsöffnung ausgebildet ist und der bei bestimmungsgemäßer Verwendung des flexiblen Verbindungselementes an der ersten Einrichtung derart befestigt wird, dass das Schüttgut durch die Eintrittsöffnung in den Durchleitungskanal eintreten kann, und (ii) einem zweiten Endabschnitt, an dem eine Austrittsöffnung ausgebildet ist und der bei bestimmungsgemäßer Verwendung des flexiblen Verbindungselementes an der zweiten Einrichtung derart befestigt wird, dass das Schüttgut durch die Austrittsöffnung hindurch aus dem Durchleitungskanal in die zweite Einrichtung austreten kann.

Zumindest der erste und/oder zweite Endabschnitt des Grundkörpers ist aus einem flexiblen Material ausgebildet und legt einen jeweiligen sich in radialer Richtung nach außen erstreckenden Flansch fest, in dem ein jeweiliger die entsprechende Öffnung umlaufender Aufnahmeraum festgelegt ist, in den ein formstabiles Stabilisationselement derart eingesetzt ist, dass bei bestimmungsgemäßer Befestigung des entsprechenden Endabschnittes eine durch ein Befestigungsmittel erzeugte Klemmkraft auf das Stabilisationselement wirkt.

Die genannte radiale Richtung bezieht sich auf die Eintritts- und/oder Austrittsöffnung und entspricht der Richtung, die von einem Zentrum der jeweiligen Öffnung in einer Ebene, in der die jeweilige Öffnung liegt, nach außen verläuft.

Die erste und/oder zweite Einrichtung kann beispielsweise ein Rohr sein, das das Schüttgut führt, oder eine Einrichtung, in der das Schüttgut gelagert oder verarbeitet wird. Bei dem Schüttgut handelt es sich beispielsweise um ein Pulver oder ein Granulat.

Das erfindungsgemäße, flexible Verbindungselement eignet sich beispielsweise als Rohrverbindung, die zur Verbindung zweier das Schüttgut führender Rohre vorgesehen ist. Nach Befestigung des Verbindungselementes an den beiden Rohren kann das Schüttgut durch den Durchleitungskanal hindurch von dem einen Rohr in das andere geleitet werden. Darüber hinaus eignet sich das erfindungsgemäße, flexible Verbindungselement bevorzugt auch zur Verbindung einer das Schüttgut verarbeitenden Einrichtung, beispielsweise eine Mühle, und eines das Schüttgut in die oder aus der verarbeitenden Einrichtung leitenden Rohres.

Insbesondere ist das flexible Verbindungselement ein Waagenkompensator, der bevorzugt einerseits an einer Einrichtung, die das Schüttgut enthält, und andererseits an einer Wiegeeinrichtung befestigt wird. Nach Befestigung des ersten und zweiten Endabschnittes des erfindungsgemäßen Waagenkompensators an der das Schüttgut enthaltenden Einrichtung und der Wiegeeinrichtung kann das Schüttgut durch den Durchleitungskanal hindurch in die Wiegeeinrichtung geleitet und dort das entsprechende Gewicht gemessen werden. Der Waagenkompensator ist so ausgestaltet bzw. konstruiert, dass Kräfte, die auf die das Schüttgut enthaltende Einrichtung wirken bzw. von dieser erzeugt werden, nicht auf die Wiegeeinrichtung übertragen werden.

Der jeweilige Aufnahmeraum ist derart festgelegt bzw. ausgebildet, dass das Stabilisationselement auswechselbar ist.

Insbesondere ist der erste und/oder zweite Flansch bevorzugt auch derart ausgebildet, dass bei der bestimmungsgemäßen Befestigung des Flansches eine dichtende Befestigung des erfindungsgemäßen flexiblen Verbindungselementes erzielt wird.

Bei dem flexiblen Material, aus dem der erste und/oder zweite Endabschnitt des Grundkörpers ausgebildet ist, handelt es sich beispielsweise um (i) ein Silikon, wie beispielsweise ein FDA-konformes Silikon, das elektrisch leitfähig oder elektrisch isolierend sein kann, (ii) einen natürlichen oder synthetischen Kautschuk, oder (iii) einen Elastomer, wie beispielsweise Ethylen-Propylen-Dien-Kautschuk (EPDM), der auch bevorzugt FDA-konform ist und/oder der elektrisch leitfähig oder elektrisch isolierend sein kann.

Erfindungsgemäß ist der jeweilige an dem entsprechenden ersten und/oder zweiten Endabschnitt festgelegte bzw. vorgesehene Flansch aus dem flexiblen Material ausgebildet und lässt sich deshalb einfach bei der Herstellung des Grundkörpers formen, beispielsweise in einem Gießvorgang. Es ist folglich nicht notwendig, dass gesonderte aus einem Metall oder Kunststoff gebildete Flanschverbindungen an den Grundkörper angegossen oder angeklebt werden.

Der jeweilige aus dem flexiblen Material ausgebildete Flansch erhält durch das in den jeweiligen Aufnahmeraum eingesetzte Stabilisationselement die notwendige Stabilität, die beispielsweise für eine Klemmverbindung erforderlich ist. Insbesondere ist der aus dem flexiblen Material ausgebildete Flansch derart ausgebildet, dass er an einen entsprechenden an der ersten oder zweiten Einrichtung ausgebildeten Verbindungsflansch angelegt und durch Anbringen einer den Flansch und den Verbindungsflansch aneinanderdrückenden Schelle befestigt werden kann.

Diese Art der Verbindung ist beispielsweise als Tri-clamp- oder Tri-clever-Verbindung bekannt. D.h., obwohl der Flansch des erfindungsgemäßen, flexiblen Verbindungselementes aus einem flexiblen Material ausgebildet ist, kann die genannte konventionelle Verbindungstechnologie zur Befestigung des erfindungsgemäßen Verbindungselementes bzw. Waagenkompensators eingesetzt werden, da nach Einsetzen des Stabilisationselementes in den jeweiligen Aufnahmeraum der Flansch die notwendige Steifigkeit für diese Art der Verbindung erhält.

Der aus dem flexiblen Material ausgebildete und an dem ersten und/oder zweiten Endabschnitt gebildete jeweilige Flansch weist eine in die radiale Richtung weisende Einsetzöffnung auf, durch die hindurch ein das formstabile Stabilisationselement bildendes, ringförmiges Stabilisationselement in den entsprechenden Aufnahmeraum eingesetzt ist.

Das ringförmige Stabilisationselement wird in den jeweiligen Aufnahmeraum eingesetzt, indem der jeweilige Flansch in der radialen Richtung deformiert und zum Einsetzen des ringförmigen Stabilisationselementes wieder in seine nicht deformierte Form zurückgeführt wird.

Besonders bevorzugt weist die Einsetzöffnung in der radialen Richtung nach außen. D.h. die Einsetzöffnung befindet sich auf einer Außenseite des Grundkörpers, und das ringförmige Stabilisationselement wird bevorzugt in den Aufnahmeraum eingesetzt, indem der Flansch derart deformiert wird, dass sein Durchmesser bzw. der Innendurchmesser der entsprechenden Öffnung verringert ist, das ringförmige Stabilisationselement über den Flansch geführt wird und anschließend der Flansch in seinen nicht deformierten Zustand zurückgeführt wird, wodurch das ringförmige Stabilisationselement durch die Einsetzöffnung hindurch in den Aufnahmeraum aufgenommen wird.

Diese Art der Ausgestaltung und Anordnung der Einsetzöffnung ist insbesondere dahingehend vorteilhaft, dass eine den Durchleitungskanal festlegende Innenseite des Grundkörpers keine Übergänge aufweist, an denen sich Schüttgut sammeln könnte.

Alternativ kann die Einsetzöffnung allerdings auch auf der Innenseite des Grundkörpers bzw. Flansches vorgesehen sein. In diesem Fall wird der Flansch ausgedehnt und über das ringförmige Stabilisationselement gestülpt.

Der gesamte Grundkörper des erfindungsgemäßen flexiblen Verbindungselementes ist bevorzugt aus dem flexiblen Material ausgebildet, wobei an dem ersten und zweiten Endabschnitt der jeweilige Flansch festgelegt bzw. ausgebildet ist und das jeweilige Stabilisationselement in den jeweiligen Aufnahmeraum eingesetzt ist.

Durch diese Ausgestaltung des Grundkörpers des erfindungsgemäßen flexiblen Verbindungselementes ist das Herstellungsverfahren sehr einfach, da lediglich der Grundkörper geformt, beispielsweise gegossen werden muss. Ein Angießen von Verbindungselementen ist folglich nicht notwendig. Außerdem stellt sich durch diese Ausgestaltung des Grundkörpers das Auswechseln des erfindungsgemäßen flexiblen Verbindungselementes überaus einfach dar. Es müssen lediglich die ringförmigen Stabilisationselemente aus den in den Flanschen gebildeten Aufnahmeräumen des auszuwechselnden Verbindungselementes entfernt und in die Aufnahmeräume des neuen Verbindungselementes eingesetzt werden.

Das ringförmige Stabilisationselement ist in den jeweiligen Aufnahmeraum auswechselbar eingesetzt, wobei das ringförmige Stabilisationselement sich in der radialen Richtung in dem jeweiligen Flansch derart erstreckt, dass es sich zwischen einer Stirnfläche des jeweiligen Flansches, die bei bestimmungsgemäßer Befestigung des ersten und/oder zweiten Endabschnittes an einem an der entsprechenden ersten oder zweiten Einrichtung ausgebildeten Verbindungsflansch anliegt, und einer der Stirnfläche abgewandten Oberfläche des jeweiligen Flansches befindet. Bei bestimmungsgemäßer Befestigung des jeweiligen Flansches an dem Verbindungsflansch mittels einer Schelle, beispielsweise einer Tri-clamp-Schelle, wirkt die von der Schelle erzeugte Klemmkraft auf das ringförmige Stabilisationselement.

Das in den Aufnahmeraum eingesetzte Stabilisationselement ist aus einem rigiden, steifen Material ausgebildet. Beispiele hierfür sind Kunststoffe oder Metalle bzw. Metalllegierungen.

Bevorzugt weist das erfindungsgemäße flexible Verbindungselement weiterhin ein weiteres ringförmiges Stabilisationselement auf, das zumindest an der der Stirnfläche abgewandten Oberfläche des jeweiligen Flansches anliegt, wobei bei der bestimmungsgemäßen Befestigung des jeweiligen Flansches an dem Verbindungsflansch der entsprechenden Einrichtung die Schelle an dem weiteren ringförmigen Stabilisationselement unmittelbar anliegt.

Bevorzugt ist das weitere ringförmige Stabilisationselement derart gekrümmt ausgebildet, dass es mit einem Teilabschnitt an der der Stirnfläche abgewandten Oberfläche des jeweiligen Flansches anliegt und dass durch seine Krümmung ein weiterer Teilabschnitt parallel zu einer Außenoberfläche eines Bereiches des Grundkörpers verläuft, der sich an den jeweiligen Flansch anschließt.

Auch das weitere ringförmige Stabilisationselement ist bevorzugt auswechselbar, und zwar indem beispielsweise das weitere ringförmige Stabilisationselement über den Grundkörper gestülpt oder abgezogen wird, bevor das entsprechende Stabilisationselement in den Aufnahmeraum eingesetzt wird.

Auf der Stirnfläche des jeweiligen Flansches ist bevorzugt eine die entsprechende Öffnung umlaufende Erhebung ausgebildet, die bei der bestimmungsgemäßen Befestigung des jeweiligen Flansches mittels der Schelle in einer in dem Verbindungsflansch ausgebildeten korrespondierenden Vertiefung sitzt und als Dichtung wirkt.

Alternativ ist bevorzugt auf der Stirnfläche des Flansches eine die entsprechende Öffnung umlaufende Vertiefung ausgebildet, in der bei der bestimmungsgemäßen Befestigung des Flansches mittels der Schelle eine an dem Verbindungsflansch ausgebildete korrespondierende Erhebung sitzt, die als Dichtung wirkt.

Weiterhin betrifft die Erfindung ein Verfahren zur Herstellung eines Grundkörpers für ein flexibles Verbindungselement zur Verbindung einer ersten Einrichtung mit einer zweiten Einrichtung und zur Durchleitung eines Schüttgutes von der ersten in die zweite Einrichtung, wobei der Grundkörper aufweist:
einen ersten Endabschnitt, an dem eine Eintrittsöffnung ausgebildet ist und der bei bestimmungsgemäßer Verwendung des flexiblen Verbindungselementes an der ersten Einrichtung derart befestigt wird, dass das Schüttgut durch die Eintrittsöffnung in den Durchleitungskanal eintreten kann, und
einen zweiten Endabschnitt, an dem eine Austrittsöffnung ausgebildet ist und der bei bestimmungsgemäßer Verwendung des flexiblen Verbindungselementes an der zweiten Einrichtung derart befestigt wird, dass das Schüttgut durch die Austrittsöffnung aus dem Durchleitungskanal in die zweite Einrichtung austreten kann, wobei
der erste und zweite Endabschnitt des Grundkörpers aus einem flexiblen Material ausgebildet sind und jeweils einen sich in radialer Richtung nach außen erstreckenden Flansch festlegen, in dem jeweils ein die entsprechende Öffnung umlaufender Aufnahmeraum festgelegt ist, in den ein formstabiles Stabilisationselement auswechselbar eingesetzt werden kann, derart, dass bei bestimmungsgemäßer Befestigung des entsprechenden Endabschnittes eine durch ein Befestigungsmittel erzeugte Klemmkraft auf das Stabilisationselement wirkt.

Das erfindungsgemäße Verfahren umfasst einen Formungsschritt, in dem der Grundkörper vollständig aus dem flexiblen Material geformt wird, beispielsweise gegossen wird, derart, dass an dem ersten und zweiten Endabschnitt der jeweilige Aufnahmeraum gebildet wird, in den das jeweilige Stabilisierungselement durch eine jeweilige Einsetzöffnung hindurch eingesetzt werden kann.

Im Folgenden wird eine bevorzugte Ausführungsform der Erfindung unter Bezug auf die beigefügten Figuren erläutert.
**Figur 1A** zeigt eine perspektivische Ansicht eines erfindungsgemäßen flexiblen Verbindungselementes, insbesondere eines erfindungsgemäßen Waagenkompensators, wobei eine zur Befestigung des Waagenkompensators vorgesehene Schelle an einem zweiten Endabschnitt des Waagenkompensators angeordnet ist;
**Figur 1B** zeigt den in Figur 1A dargestellten Waagenkompensator in einem perspektivischen Längsschnitt;
**Figur 1C** zeigt eine Vergrößerung des in Figur 1B eingekreisten Bereiches IC;
**Figur 2A** zeigt eine Seitenansicht des erfindungsgemäßen Waagenkompensators;
**Figur 2B** zeigt eine Seitenansicht des erfindungsgemäßen Waagenkompensators im Längsschnitt;
**Figuren 3A und 3B** zeigen jeweils eine vergrößerte Ansicht der in Fig. 2B markierten Bereiche IIIA und IIIB.

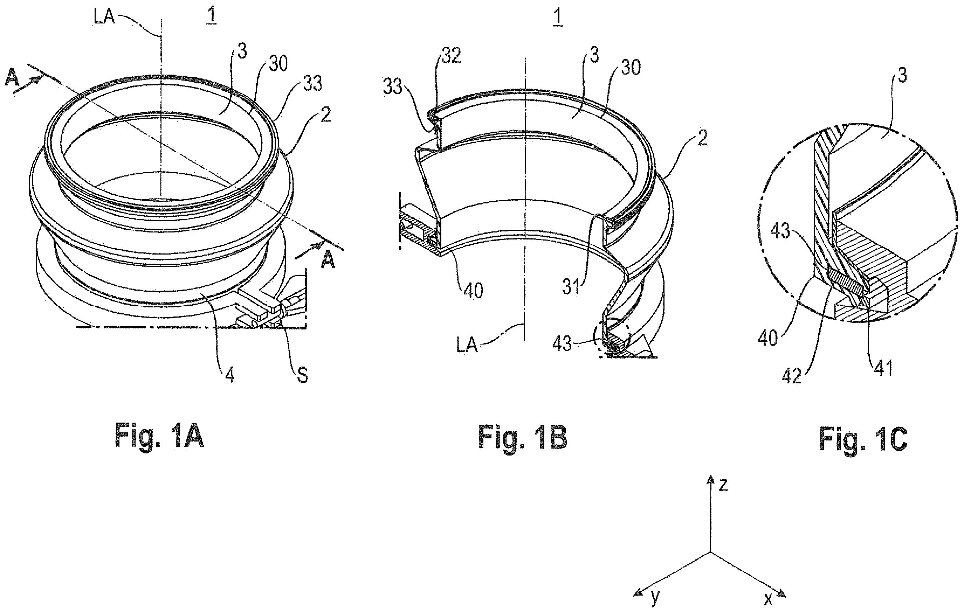

Figur 1A zeigt eine bevorzugte Ausführungsform eines erfindungsgemäßen flexiblen Verbindungselementes 1, insbesondere eines erfindungsgemäßen Waagenkompensators.

Die in Figur 1A gezeigte Z-Achse weist in Längsrichtung des erfindungsgemäßen Waagenkompensators 1, in der sich die Längsachse LA des Waagenkompensators 1 erstreckt.

Die in Figur 1A gezeigte X-Achse weist in Breitenrichtung und die gezeigte Y-Achse in Tiefenrichtung des Waagenkompensators 1. Aufgrund der Rotationssymmetrie des Waagenkompensators 1 in Bezug auf die Längsachse LA entsprechen die Breiten- und Tiefenrichtung radialen Richtungen, in denen sich der Waagenkompensator 1 in seiner Breite und Tiefe erstreckt.

Der Waagenkompensator 1 weist einen Grundkörper 2 auf, der aus einem flexiblen Material gefertigt ist. Das flexible Material ist beispielsweise (i) ein Silikon, wie beispielsweise ein FDA-konformes Silikon, das elektrisch leitfähig oder elektrisch isolierend sein kann, (ii) ein natürlicher oder synthetischer Kautschuk, oder (iii) ein Elastomer, wie beispielsweise Ethylen-Propylen-Dien-Kautschuk (EPDM), der auch bevorzugt FDA-konform ist und der elektrisch leitfähig oder elektrisch isolierend sein kann. Der Grundkörper 2 ist insbesondere ein aus dem flexiblen Material geformter, beispielsweise gegossener Artikel.

An einem ersten Endabschnitt 3 des Grundkörpers 2 ist eine Eintrittsöffnung 30 und an einem zweiten Endabschnitt 4 des Grundkörpers 2 eine Austrittsöffnung 40 ausgebildet. Der erfindungsgemäße Waagenkompensator 1 wird bei bestimmungsgemäßer Verwendung befestigt, indem der erste Endabschnitt 3 an einer ersten Einrichtung (nicht gezeigt) und der zweite Endabschnitt 4 an einer zweiten Einrichtung (nicht gezeigt) befestigt wird.

Bei der ersten Einrichtung handelt es sich bevorzugt um eine ein Schüttgut speichernde/aufnehmende/enthaltende/verarbeitende Einrichtung und bei der zweiten Einrichtung bevorzugt um eine Wiegeeinrichtung. Das Schüttgut ist beispielsweise ein Pulver oder ein Granulat.

Wenn der erfindungsgemäße Waagenkompensator 1 an der ersten und zweiten Einrichtung befestigt ist, kann das Schüttgut durch die Eintrittsöffnung 30 hindurch in einen von dem Grundkörper 2 festgelegten Durchleitungskanal eintreten und anschließend durch die Austrittsöffnung 40 hindurch aus dem Durchleitungskanal in die zweite Einrichtung austreten. Allgemein ausgedrückt kann das Schüttgut durch den Waagenkompensator 1 hindurch von der das Schüttgut speichernden, aufnehmenden, enthaltenden oder verarbeitenden Einrichtung in die Wiegeeinrichtung geleitet werden, wo das Gewicht des überführten Schüttgutes ermittelt werden kann.

Zur Befestigung des erfindungsgemäßen Waagenkompensators 1 an der ersten und zweiten Einrichtung dient jeweils eine Schelle S, die um den jeweiligen Endabschnitt 3,4 gelegt und mittels einer Flügelschraube festgezogen wird. In Figur 1A ist die Schelle S an den zweiten Endabschnitt 4 des Waagenkompensators 1 zur Befestigung des zweiten Endabschnittes 4 an der nicht gezeigten zweiten Einrichtung angelegt. Der erste Endabschnitt 3 kann auf gleiche Art und Weise mit einer weiteren Schelle S an der entsprechenden ersten Einrichtung befestigt werden.

Die zur Befestigung geeigneten Schellen sind im Stand der Technik allgemein aus der Vakuumtechnologie als Tri-clamp-Schellen oder Tri-clever-Schellen bekannt.

Figur 1B zeigt eine perspektivische Schnittansicht des erfindungsgemäßen Waagenkompensators 1, wobei die Schnittansicht einem Schnitt entlang der in Figur 1A gezeigten Schnittlinie A-A und die Schnittebene der in Figur 1B gezeigten Z-X-Ebene entspricht.

In Figur 1C ist der in Figur 1B eingekreiste Bereiche IC vergrößert dargestellt.

Wie aus diesen Figuren ersichtlich wird, ist an dem zweiten Endabschnitt 4 des Waagenkompensators 1 ein Flansch 43 ausgebildet, der die Austrittsöffnung 40 umläuft und in einer entsprechenden Nut der Schelle S aufgenommen ist. An der zweiten Einrichtung ist zur Befestigung des erfindungsgemäßen Waagenkompensators 1 ein entsprechender Verbindungsflansch (nicht gezeigt) ausgebildet. Wenn die Schelle S zur Befestigung des Waagenkompensators 1 angelegt wird, befinden sich der Flansch 43 und der entsprechende Verbindungsflansch gemeinsam innerhalb der Nut der Schelle S und werden durch Festziehen der Flügelschraube dichtend aneinandergedrückt.

An dem ersten Endabschnitt 3 des Waagenkompensators 1 ist ebenfalls ein entsprechender Flansch 33 ausgebildet, der auf gleiche Art und Weise wie der an dem zweiten Endabschnitt 4 ausgebildete Flansch 43 an der ersten Einrichtung mit einer entsprechende Schelle S befestigt werden kann. Als integraler Bestandteil des Grundkörpers 2 ist jeder Flansch 33,43 aus dem flexiblen Material ausgebildet.

Damit der jeweilige Flansch 33,43 eine für die Befestigung notwendige Stabilität erhält, ist in jedem Flansch 33,43 ein Aufnahmeraum 31,41 ausgebildet, die jeweils die entsprechende Öffnung umlaufen und in denen jeweils ein ringförmiges Stabilisationselement 32,42 aufgenommen ist. Das jeweilige Stabilisationselement 32,42 kann beispielsweise aus einem Metall oder einem Kunststoff ausgebildet sein.

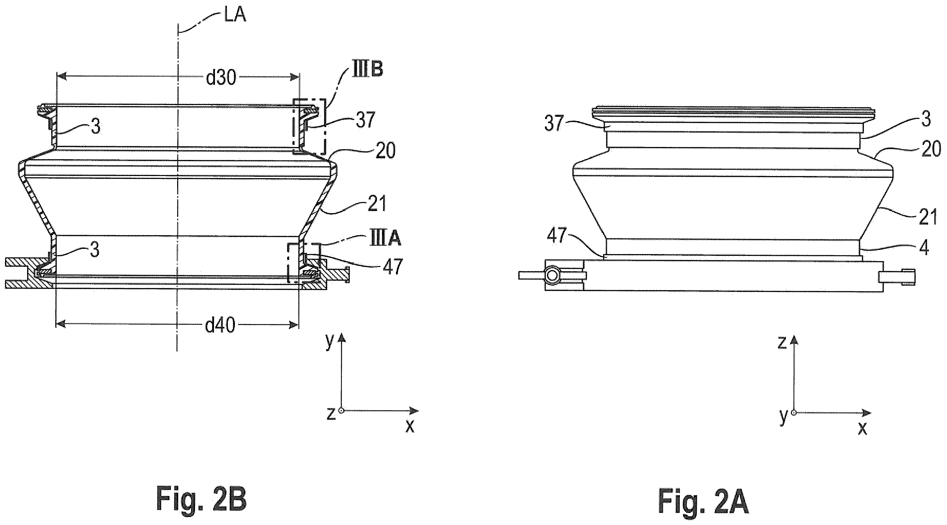

In Figuren 2A und 2B ist der erfindungsgemäße Waagenkompensator 1 in einer Seitenansicht dargestellt, wobei Figur 2B eine Schnittansicht ist, die einem Schnitt entlang der in Figur 1A gezeigten Schnittlinie A-A entspricht.

Die sich in Längsrichtung (Z-Richtung) erstreckende Höhe des Waagenkompensators 1 beträgt bevorzugt 130-150 mm. Die sich in radialer Richtung erstreckenden Innendurchmesser d30 und d40 der Eintrittsöffnung 30 bzw. Austrittsöffnung 40 des Waagenkompensators 1 sind bevorzugt identisch und betragen bevorzugt 190-210 mm.

In dem Bereich der Endabschnitte 3, 4 ist der Innendurchmesser d30, d40 des Grundkörpers 2 konstant.

Ausgehend von der Eintrittsöffnung 30 beinhaltet der Grundkörper 2 einen sich an den ersten Endabschnitt 3 anschließenden Bereich 20, in dem sich der Grundkörper 2 sprungartig verbreitert, und einen sich an den Bereich 20 anschließenden Bereich 21, in dem sich der Grundkörper 2 wieder verjüngt bis er letztendlich wieder in den zweiten Endabschnitt 4 konstanten Innendurchmessers d40 übergeht.

Der Bereich 20, in dem sich der Grundkörper 2 sprungartig verbreitert, hat eine geringere Wandstärke als der Bereich 21 und als die Endabschnitte 3,4. Die Wandstärke des Bereiches 20 beträgt beispielsweise 1 mm. Aufgrund der geringeren Wandstärke ist dieser Bereich 20 flexibel bzw. flexibler als der Bereich 21 bzw. die Endabschnitte 3, 4 ausgestaltet, weshalb Kräfte, die von der ersten Einrichtung erzeugt werden und auf den ersten Endabschnitt 3 wirken, zu einer Deformation des Bereiches 20 führen und nicht über den Waagenkompensator 1 auf die zweite Einrichtung - die Wiegeeinrichtung - übertragen werden und dort Messergebnisse verfälschen.

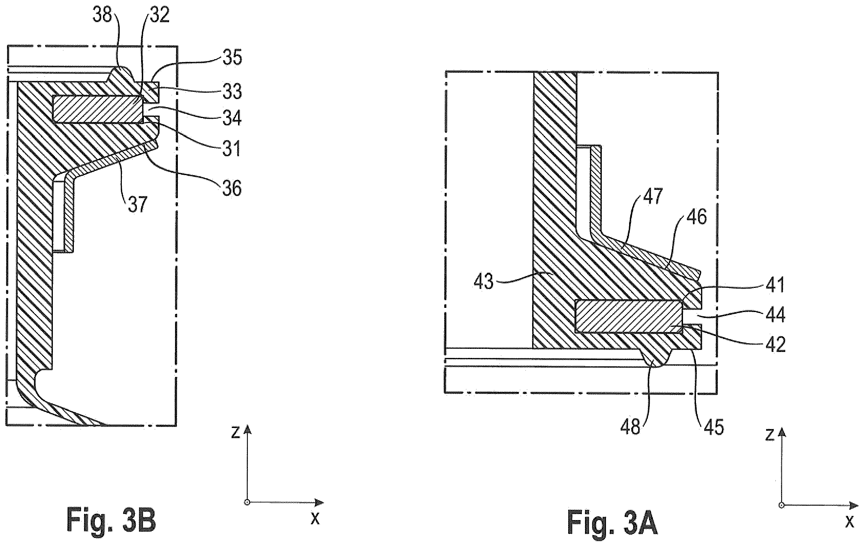

Unter Bezug auf Figuren 3A und 3B werden nunmehr die Endabschnitte 3,4 des erfindungsgemäßen Waagenkompensators 1 im Detail erläutert. Figur 3A entspricht dem in Figur 2B mit IIIA bezeichneten Bereich und Figur 3B dem in Figur 2B mit IIIB bezeichneten Bereich.

Wie diese Figuren zeigen, ist an dem ersten und zweiten Endabschnitt 3,4 jeweils der Flansch 33, 43, der sich in der radialen Richtung (X- und Y-Richtung) erstreckt, ausgebildet. Der jeweilige Flansch 33,43 ist integraler Bestandteil des Grundkörpers 2 und wird beispielsweise bei der Herstellung des Grundkörpers 2 mit ausgebildet. Insoweit ist der jeweilige Flansch 33,43 wie auch der restliche Grundkörper 2 aus dem flexiblen Material, wie beispielsweise einem Silikon, geformt.

In jedem Flansch 33,43 ist jeweils der erwähnte Aufnahmeraum 41 festgelegt bzw. geformt, in den jeweils das ringförmige Stabilisationselement 32,42 eingesetzt ist.

Jeder Flansch 33,43 ist so ausgebildet, dass der jeweilige Aufnahmeraum 31,41 durch eine Einsetzöffnung 34,44 hindurch zugänglich ist. Die Einsetzöffnung 34,44 ist in jedem Flansch 33,43 so angeordnet, dass sie sich auf einer Außenoberfläche des Grundkörpers 2 befindet und in radialer Richtung (X- und Y-Richtung) nach außen weist.

Zum Einsetzen des ringförmigen Stabilisationselements 32,42 in den jeweiligen Aufnahmeraum 31,41 wird der Grundkörper 2 bzw. der jeweilige erste oder zweite Endabschnitt 3,4 derart deformiert, dass der Durchmesser des entsprechenden Flansches 33,43 verringert ist, und anschließend das ringförmige Stabilisationselement 32,42 über den deformierten Endabschnitt 3,4 geführt. Wenn der deformierte Endabschnitt 3,4 aus diesem Zustand in seine ursprüngliche Form bzw. Position zurückgeführt wird, kann das ringförmige Stabilisationselement durch die jeweilige Einsetzöffnung 34,44 in den jeweiligen Aufnahmeraum 31,41 gedrückt werden.

Das ringförmige Stabilisationselement 32,42 hat im Längsschnitt des erfindungsgemäßen Waagenkompensators, d.h. in der Z-X-Ebene, eine rechteckige Form, wobei die Breite des jeweiligen ringförmigen Stabilisationselementes in der gezeigten X-Richtung (radiale Richtung in Bezug auf die Längsachse des Waagenkompensators 1) beispielsweise 9 mm beträgt, und die Höhe des jeweiligen ringförmigen Stabilisationselementes 32,42 in der gezeigten Z-Richtung beispielsweise 3 mm beträgt.

Wie aus einer Kombination der Figuren 2B, 3A und 3B verständlich wird, wird der jeweilige Flansch 33,43 bei bestimmungsgemäßer Befestigung mit einer Stirnfläche 35,45 an eine korrespondierende Fläche des an der ersten oder zweiten Einrichtung ausgebildeten Verbindungsflansches angelegt und sowohl der Flansch 33,43 als auch der Verbindungsflansch von der Schelle S derart umschlossen, dass sie sich innerhalb der Nut der Schelle S befinden. Mit Festziehen der Flügelschraube der Schelle S wird die Klemmkraft, mit der die Stirnfläche 35,45 des jeweiligen Flansches an die korrespondierende Fläche gedrückt wird, erhöht.

Der jeweilige Aufnahmeraum 31,41 ist in jedem Flansch 33,43 so ausgebildet, dass sich das ringförmige Stabilisationselement 32,42 zwischen der jeweiligen Stirnfläche 35,45 und einer der entsprechenden Stirnfläche 35,45 abgewandten Oberfläche 36,46 des Flansches befindet. Hierdurch erhält der jeweilige Flansch 33,43 durch das jeweilige Stabilisationselement 32,42 die für die Befestigung notwendige Steifigkeit.

Zusätzlich zu dem ringförmigen und in den jeweiligen Aufnahmeraum 31,41 eingesetzten Stabilisationselement 32,42 weist der erfindungsgemäße Waagenkompensator 1 bevorzugt noch ein weiteres ringförmiges Stabilisationselement 37,47 auf, das in dem in Figuren 3A und 3B gezeigten Längsschnitt eine gebogene Kontur aufweist. Das weitere ringförmige Stabilisationselement 37,47 ist ebenfalls auswechselbar und beispielsweise aus einem Metall bzw. einer Metalllegierung oder einem Kunststoff gefertigt. Das weitere Stabilisationselement 37,47 liegt mit einem Teilabschnitt an der jeweiligen der Stirnfläche 35,45 abgewandten Oberfläche 36,46 des jeweiligen Flansches 33,43 an, und ein weiterer Teilabschnitt verläuft parallel zu einer Außenoberfläche des Grundkörpers 2, die sich in Längsrichtung des Grundkörpers 2 an den jeweiligen Flansch 33,43 anschließt, wobei der weitere Teilabschnitt von der parallelen Außenoberfläche des Grundkörpers 2 leicht beabstandet ist.

Wenn die Schelle S zur Befestigung des entsprechenden Flansches angelegt wird, liegt die Schelle S, wie es aus Figuren 1C und 2B gut ersichtlich ist, unmittelbar an dem weiteren Stabilisationselement 37,47 unmittelbar an.

Die von der Schelle S erzeugte Klemmkraft wirkt mittelbar über den Teilabschnitt des weiteren Stabilisationselements 37,47, der an der der jeweiligen Stirnfläche 35,45 abgewandten Oberfläche 36,46 des jeweiligen Flansches 33,43 anliegt, und das flexible Material des entsprechenden Flansches auf das ringförmige und in den jeweiligen Aufnahmeraum 31,41 eingesetzte Stabilisationselement, über das wiederum die jeweilige Stirnfläche 35,45 an die korrespondierende Fläche des an der ersten oder zweiten Einrichtung ausgebildeten Verbindungsflansches gedrückt wird.

Auf der Stirnfläche 35,45 des jeweiligen Flansches 33,43 ist eine Erhebung 38,48 derart ausgebildet, dass sie die entsprechende Öffnung (Eintrittsöffnung 30 oder Austrittsöffnung 40) umläuft. Wenn der jeweilige Flansch 33,43 an einen entsprechenden Verbindungsflansch zur Befestigung angelegt wird, taucht die Erhebung 38,48 in eine entsprechende in dem Verbindungsflansch gebildete Vertiefung ein und wirkt nach Festziehen der Schelle S als entsprechende Dichtung.

Die Erfindung ist nicht auf einen Waagenkompensator 1, wie er im Vorhergehenden erläutert wurde, beschränkt. Insbesondere kann die Ausgestaltung des ersten und zweiten Endabschnittes auch auf übliche Verbindungselemente, die beispielsweise als Rohrverbindung zum Einsatz kommen, übertragen werden.

## Patentansprüche

1. Flexibles Verbindungselement (1) zur Verbindung einer ersten Einrichtung mit einer zweiten Einrichtung und zur Durchleitung eines Schüttgutes von der ersten Einrichtung in die zweite Einrichtung, wobei das Verbindungselement (1) aufweist:
einen einen Durchleitungskanal festlegenden Grundkörper (2) mit einem ersten Endabschnitt (3), an dem eine Eintrittsöffnung (30) ausgebildet ist und der bei bestimmungsgemäßer Verwendung des flexiblen Verbindungselementes (1) an der ersten Einrichtung derart befestigt wird, dass das Schüttgut durch die Eintrittsöffnung (30) in den Durchleitungskanal eintreten kann, und einem zweiten Endabschnitt (4), an dem eine Austrittsöffnung (40) ausgebildet ist und der bei bestimmungsgemäßer Verwendung des flexiblen Verbindungselementes (1) an der zweiten Einrichtung derart befestigt wird, dass das Schüttgut durch die Austrittsöffnung (40) aus dem Durchleitungskanal in die zweite Einrichtung austreten kann, wobei
zumindest der erste und/oder zweite Endabschnitt (3,4) des Grundkörpers (2) aus einem flexiblen Material ausgebildet ist und einen sich in radialer Richtung nach außen erstreckenden Flansch (33,43) festlegt, in dem ein jeweiliger die entsprechende Öffnung umlaufender Aufnahmeraum (31, 41) festgelegt ist, in den ein formstabiles ringförmiges Stabilisationselement (32,42) derart auswechselbar eingesetzt ist, dass bei bestimmungsgemäßer Befestigung des entsprechenden Endabschnittes eine durch eine Schelle erzeugte Klemmkraft auf das Stabilisationselement wirkt, wobei das ringförmige Stabilisationselement (32,42) sich in der radialen Richtung in dem jeweiligen Flansch (33,43) derart erstreckt, dass es sich zwischen einer Stirnfläche (35,45) des jeweiligen Flansches (33,43), die bei bestimmungsgemäßer Befestigung des ersten und/oder zweiten Endabschnittes (3,4) an einem an der entsprechenden Einrichtung ausgebildeten Verbindungsflansch anliegt, und einer der Stirnfläche (35, 45) abgewandten Oberfläche (36,46) des jeweiligen Flansches (33,43) befindet, derart, dass bei bestimmungsgemäßer Befestigung des jeweiligen Flansches (33,43) an dem Verbindungsflansch mittels der Schelle die durch Festziehen der Schelle erzeugte, auf die abgewandte Oberfläche (36,46) wirkende Klemmkraft auf das ringförmige Stabilisationselement (31, 41) derart wirkt, dass Flansch und Verbindungsflansch aneinander gedrückt werden.

2. Flexibles Verbindungselement gemäß Anspruch 1, wobei der gesamte Grundkörper (2) aus dem flexiblen Material ausgebildet ist, und
an dem ersten und zweiten Endabschnitt (3,4) der jeweilige Flansch (33,43) festgelegt ist und in den jeweiligen Aufnahmeraum das jeweilige Stabilisationselement eingesetzt ist.

3. Flexibles Verbindungselement gemäß Anspruch 1 oder 2, weiterhin aufweisend ein weiteres ringförmiges Stabilisationselement (37,47), das zumindest an der der Stirnfläche (35,45) abgewandten Oberfläche (36,46) des jeweiligen Flansches (33,43) anliegt, wobei bei der bestimmungsgemäßen Befestigung des jeweiligen Flansches (33,43) an dem Verbindungsflansch die Schelle an dem weiteren ringförmigen Stabilisationselement (37, 47) unmittelbar anliegt.

4. Flexibles Verbindungselement gemäß Anspruch 1, 2 oder 3, wobei auf der Stirnfläche des jeweiligen Flansches (33,43) eine die entsprechende Öffnung umlaufende Erhebung (38, 48) ausgebildet ist, die bei der bestimmungsgemäßen Befestigung des jeweiligen Flansches (33,43) mittels der Schelle in einer in dem Verbindungsflansch ausgebildeten korrespondierenden Vertiefung sitzt und als Dichtung wirkt.

5. Flexibles Verbindungselement gemäß Anspruch 1, 2 oder 3, wobei auf der Stirnfläche des Flansches eine die entsprechende Öffnung umlaufende Vertiefung ausgebildet ist, in der bei der bestimmungsgemäßen Befestigung des Flansches (33,43) mittels der Schelle eine an dem Verbindungsflansch ausgebildete korrespondierende Erhebung sitzt, die als Dichtung wirkt.

6. Verfahren zur Herstellung eines Grundkörpers (2) für ein flexibles Verbindungselement (1), das zur Verbindung einer ersten Einrichtung mit einer zweiten Einrichtung und zur Durchleitung eines Schüttgutes von der ersten in die zweite Einrichtung vorgesehen ist, wobei der Grundkörper (2)
einen ersten Endabschnitt (3), an dem eine Eintrittsöffnung (30) ausgebildet ist und der bei bestimmungsgemäßer Verwendung des flexiblen Verbindungselementes (1) an der ersten Einrichtung derart befestigt wird, dass das Schüttgut durch die Eintrittsöffnung (30) in den Durchleitungskanal eintreten kann, und
einen zweiten Endabschnitt (4), an dem eine Austrittsöffnung (40) ausgebildet ist und der bei bestimmungsgemäßer Verwendung des flexiblen Verbindungselementes (1) an der zweiten Einrichtung derart befestigt wird, dass das Schüttgut durch die Austrittsöffnung (40) aus dem Durchleitungskanal in die zweite Einrichtung austreten kann, aufweist, wobei
der erste und zweite Endabschnitt (3, 4) des Grundkörpers (2) jeweils einen sich in radialer Richtung nach außen erstreckenden Flansch (33, 43) festlegen, in dem jeweils ein die entsprechende Öffnung umlaufender Aufnahmeraum (31, 41) festgelegt ist, in den ein formstabiles ringförmiges Stabilisationselement (32, 42) auswechselbar eingesetzt werden kann, derart, dass bei bestimmungsgemäßer Befestigung des entsprechenden Endabschnittes eine durch eine Schelle erzeugte Klemmkraft auf das Stabilisationselement (32, 42) wirkt; wobei das Verfahren folgende Schritte umfasst:
einen Formungsschritt, in dem der Grundkörper (2) vollständig aus dem flexiblen Material geformt wird, derart, dass an dem ersten und zweiten Endabschnitt (3, 4) der jeweilige Aufnahmeraum (31, 41) gebildet wird, in den das jeweilige Stabilisierungselement (32, 42) durch eine jeweilige Einsetzöffnung (34, 44) hindurch auswechselbar eingesetzt werden kann, wobei der Grundkörper derart geformt wird, dass das ringförmige Stabilisationselement (32,42) sich in der radialen Richtung in dem jeweiligen Flansch (33,43) derart erstreckt, dass es sich zwischen einer Stirnfläche (35,45) des jeweiligen Flansches (33,43), die bei bestimmungsgemäßer Befestigung des ersten und/oder zweiten Endabschnittes (3,4) an einem an der entsprechenden Einrichtung ausgebildeten Verbindungsflansch anliegt, und einer der Stirnfläche (35, 45) abgewandten Oberfläche (36,46) des jeweiligen Flansches (33,43) befindet, derart, dass bei bestimmungsgemäßer Befestigung des jeweiligen Flansches (33,43) an dem Verbindungsflansch mittels der Schelle die durch Festziehen der Schelle erzeugte, auf die abgewandte Oberfläche (36,46) wirkende Klemmkraft auf das ringförmige Stabilisationselement (31, 41) derart wirkt, dass Flansch und Verbindungsflansch aneinander gedrückt werden.

## Claims

1. A flexible connecting element (1) for connecting a first device to a second device and for conveying a bulk material from the first device into the second device, wherein the connecting element (1) comprises:
a base body (2) defining a conveying channel having a first end portion (3) at which an inlet opening (30) is formed and which, when the flexible connecting element (1) is used in the intended manner, is attached to the first device, in such a way that the bulk material can enter into the conveying channel through the inlet opening (30), and a second end portion (4), at which an outlet opening (40) is formed and which, when the flexible connecting element (1) is used in the intended manner, is attached to the second device, in such a way that the bulk material can exit the conveying channel through the outlet opening (40) into the second device, wherein
at least the first and/or the second end portion (3, 4) of the base body (2) is made of a flexible material and defines a flange (33, 43) which extends outwards in a radial direction, in which flange a respective receiving space (31, 41) is defined which encircles the corresponding opening and into which a dimensionally stable annular stabilisation element (32, 42) is inserted in a replaceable manner, in such a way that, when the corresponding end portion is attached in the intended manner, a clamping force generated by a clamp acts on the stabilisation element, wherein the annular stabilisation element (32, 42) extends in the radial direction in the respective flange (33, 43), in such a way that it is located between an end face (35, 45) of the respective flange (33, 43), which abuts against a connection flange formed at the corresponding device when the first and/or second end portion (3, 4) are attached in the intended manner, and a surface (36, 46) of the respective flange (33, 43) which faces away from the end face (35, 45), in such a way that, when the respective flange (33, 43) is attached in the intended manner to the connection flange by means of a clamp, the clamping force generated by the tightening of the clamp and acting on the surface (36, 46) facing away acts on the annular stabilisation element (31, 41), in such a way that the flange and the connection flange are pressed against one another.

2. The flexible connecting element according to claim 1, wherein the entire base body (2) is made of a flexible material, and
is defined at the first and second end portion (3, 4) of the respective flange (33, 43) and the respective stabilisation element is inserted into the respective receiving space.

3. The flexible connecting element according to claim 1 or 2, further comprising a further annular stabilisation element (37, 47), which at least abuts on the surface (36, 46) of the respective flange (33, 43) that faces away from the end face (35, 45), wherein, when the respective connection flange (33, 43) is attached to the connection flange in the intended manner, the clamp directly abuts against the further annular stabilisation element (37, 47).

4. The flexible connecting element according to claim 1, 2 or 3, wherein an elevation (38, 48), which encircles the corresponding opening, is formed on the end face of the respective flange (33, 43), which elevation sits, when the respective flange (33, 43) is attached in the intended manner by means of the clamp, in a corresponding recess formed in the connection flange and acts as a seal.

5. The flexible connecting element according to claim 1, 2 or 3, wherein a recess, which encircles the corresponding opening, is formed on the end face of the respective flange, in which recess, when the respective flange (33, 43) is attached in the intended manner by means of the clamp, a corresponding elevation formed on the connection flange sits, said elevation acting as a seal.

6. A method for producing a base body (2) for a flexible connecting element (1), which is provided for connecting a first device to a second device and for conveying a bulk material from the first into the second device, wherein the base body (2)
comprises a first end portion (3), at which an inlet opening (30) is formed and which, when the flexible connecting element (1) is used in the intended manner, is attached to the first device, in such a way that the bulk material can enter into the conveying channel through the inlet opening (30), and
a second end portion (4), at which an outlet opening (40) is formed and which, when the flexible connecting element (1) is used in the intended manner, is attached to the second device, in such a way that the bulk material can exit the conveying channel through the outlet opening (40) into the second device, wherein
the first and second end portion (3, 4) of the base body (2) each define a flange (33, 43) extending outwards in a radial direction, in each of which flanges a receiving space (31, 41) is defined which encircles the corresponding opening, into which receiving space a dimensionally stable annular stabilisation element (32, 42) can be inserted in a replaceable manner, in such a way that, when the corresponding end portion is attached in the intended manner, a clamping force generated by a clamp acts on the stabilisation element (32, 42), wherein the method comprises the following steps:
a forming step, in which the base body (2) is completely formed of the flexible material, in such a way that the respective receiving space (31, 41) is formed at the first and second end portion (3, 4), into which receiving space respective stabilisation element (32, 42) can be inserted through a respective insertion opening (34, 44) in a replaceable manner, wherein the base body is formed such that the annular stabilisation element (32, 42) extends in the respective flange (33, 43) in the radial direction, in such a way that it is located between an end face (35, 45) of the respective flange (33, 43), which abuts against a connection flange formed at the corresponding device when the first and/or second end portion (3, 4) are attached in the intended manner, and a surface (36, 46) of the respective flange (33, 43) that faces away from the end face (35, 45), in such a way that, when the respective flange (33, 43) is attached in the intended manner to the connection flange by means of the clamp, the clamping force generated by the tightening of the clamp and acting on the surface (36, 46) facing away acts on the annular stabilisation element (31, 41), in such a way that the flange and the connection flange are pressed against one another.

## Revendications

1. Elément de liaison flexible (1) destiné à relier un premier dispositif à un deuxième dispositif et à faire passer un produit en vrac du premier dispositif dans le deuxième dispositif, dans lequel l'élément de liaison (1) présente :
un corps de base (2) définissant un canal de passage et pourvu d'une première partie d'extrémité (3) au niveau de laquelle un orifice d'entrée (30) est formé et qui, lorsque l'élément de liaison flexible (1) est utilisé conformément à l'usage prévu, est fixée au premier dispositif de telle sorte que le produit en vrac peut pénétrer dans le canal de passage par l'orifice d'entrée (30), et d'une deuxième partie d'extrémité (4), au niveau de laquelle un orifice de sortie (40) est formé et qui, lorsque l'élément de liaison flexible (1) est utilisé conformément à l'usage prévu, est fixée au deuxième dispositif de telle sorte que le produit en vrac peut sortir du canal de passage par l'orifice de sortie (40) et entrer dans le deuxième dispositif, dans lequel
au moins la première et/ou deuxième partie d'extrémité (3, 4) du corps de base (2) est formée d'un matériau flexible et définit une bride (33, 43) s'étendant vers l'extérieur dans la direction radiale, dans laquelle est défini un espace de réception (31, 41) respectif qui fait le tour de l'orifice correspondant et dans lequel un élément de stabilisation annulaire (32, 42) indéformable est inséré de manière interchangeable, de telle sorte que, lorsque la partie d'extrémité correspondante est fixée conformément à l'usage prévu, une force de serrage produite par un collier agit sur l'élément de stabilisation, dans lequel l'élément de stabilisation annulaire (32, 42) s'étend dans la direction radiale dans la bride (33, 43) respective, de telle sorte qu'il se situe entre une face frontale (35, 45) de la bride (33, 43) respective, laquelle face s'applique contre une bride de liaison formée sur le dispositif correspondant lorsque la première et/ou deuxième partie d'extrémité (3, 4) est fixée conformément à l'usage prévu, et une surface (36, 46), opposée à la face frontale (35, 45), de la bride (33, 43) respective, de telle sorte que, lorsque la bride (33, 43) respective est fixée à la bride de liaison au moyen du collier conformément à l'usage prévu, la force de serrage agissant sur la surface (36, 46) opposée et produite par le serrage à fond du collier agit sur l'élément de stabilisation annulaire (32, 42), de telle sorte que la bride et la bride de liaison sont pressées l'une contre l'autre.

2. Elément de liaison flexible selon la revendication 1, dans lequel le corps de base (2) est entièrement formé du matériau flexible, et
la bride (33, 43) respective est fixée à la première et deuxième partie d'extrémité (3, 4) et l'élément de stabilisation respectif est inséré dans l'espace de réception respectif.

3. Elément de liaison flexible selon la revendication 1 ou 2, présentant en outre un autre élément de stabilisation annulaire (37, 47), qui s'applique au moins contre la surface (36, 46), opposée à la face frontale (35, 45), de la bride (33, 43) respective, dans lequel, lorsque la bride (33, 43) respective est fixée à la bride de liaison conformément à l'usage prévu, le collier s'applique directement contre l'autre élément de stabilisation annulaire (37, 47).

4. Elément de liaison flexible selon la revendication 1, 2 ou 3, dans lequel une partie surélevée (38, 48) faisant le tour de l'orifice correspondant, laquelle, lorsque la bride (33, 43) respective est fixée conformément à l'usage prévu au moyen du collier, repose dans un évidement correspondant formé dans la bride de liaison et joue le rôle de joint, est formée sur la face frontale de la bride (33, 43) respective.

5. Elément de liaison flexible selon la revendication 1, 2 ou 3, dans lequel un évidement qui fait le tour de l'orifice correspondant et dans lequel repose une partie surélevée correspondante formée sur la bride de liaison et jouant le rôle de joint, lorsque la bride (33, 43) est fixée conformément à l'usage prévu, est formé sur la face frontale de la bride.

6. Procédé de fabrication d'un corps de base (2) pour un élément de liaison flexible (1), qui est destiné à relier un premier dispositif à un deuxième dispositif et à faire passer un produit en vrac du premier dans le deuxième dispositif, dans lequel le corps de base (2) présente :
une première partie d'extrémité (3) sur laquelle un orifice d'entrée (30) est formé et qui, lorsque l'élément de liaison flexible (1) est utilisé conformément à l'usage prévu, est fixée au premier dispositif de telle sorte que le produit en vrac peut entrer dans le canal de passage par l'orifice d'entrée (30), et
une deuxième partie d'extrémité (4) sur laquelle un orifice de sortie (40) est formé et qui, lorsque l'élément de liaison flexible (1) est utilisé conformément à l'usage prévu, est fixée au deuxième dispositif de telle sorte que le produit en vrac peut sortir du canal de passage par l'orifice de sortie (40) et entrer dans le deuxième dispositif, dans lequel
la première et la deuxième partie d'extrémité (3, 4) du corps de base (2) définissent respectivement une bride (33, 43) s'étendant vers l'extérieur dans la direction radiale, dans laquelle est défini respectivement un espace de réception (31, 41) qui fait le tour de l'orifice correspondant et dans lequel un élément de stabilisation annulaire (32, 42) indéformable peut être inséré de manière interchangeable, de telle sorte que, lorsque la partie d'extrémité correspondante est fixée conformément à l'usage prévu, une force de serrage produite par un collier agit sur l'élément de stabilisation (32, 42) ; dans lequel le procédé comporte les étapes suivantes :
une étape de façonnage, au cours de laquelle le corps de base (2) est entièrement façonné à partir du matériau flexible, de telle sorte que l'espace de réception (31, 41) respectif est formé sur la première et deuxième partie d'extrémité (3, 4), espace dans lequel l'élément de stabilisation (32, 42) respectif peut être inséré de manière interchangeable par un orifice d'insertion (34, 44) respectif, dans lequel le corps de base est formé de telle sorte que l'élément de stabilisation annulaire (32, 42) s'étend dans la direction radiale dans la bride (33, 43) respective de manière à se situer entre une face frontale (35, 45) de la bride (33, 43) respective, laquelle face s'applique contre une bride de liaison formée sur le dispositif correspondant lorsque la première et/ou deuxième partie d'extrémité (3, 4) est fixée conformément à l'usage prévu, et une surface (36, 46), opposée à la face frontale (35, 45), de la bride (33, 43) respective, de telle sorte que, lorsque la bride (33, 43) respective est fixée à la bride de liaison conformément à l'usage prévu au moyen du collier, la force de serrage agissant sur la surface (36, 46) opposée et produite par le serrage à fond du collier agit sur l'élément de stabilisation annulaire (31, 41) de telle sorte que la bride et la bride de liaison sont pressées l'une contre l'autre.
